(19) Europäisches Patentamt
European Patent Office
Office européen des brevets

(11) **EP 3 696 725 A1**

(12) **EUROPEAN PATENT APPLICATION**
published in accordance with Art. 153(4) EPC

(43) Date of publication:
**19.08.2020 Bulletin 2020/34**

(51) Int Cl.:
***G06K 9/32*** *(2006.01)*

(21) Application number: **19750746.0**

(22) Date of filing: **02.02.2019**

(86) International application number:
**PCT/CN2019/074658**

(87) International publication number:
**WO 2019/154383 (15.08.2019 Gazette 2019/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.02.2018 CN 201810117890**

(71) Applicants:
• **Nuctech Company Limited**
 **TongFang Building,**
 **Shuangqinglu,**
 **Haidian District**
 **Beijing 100084 (CN)**
• **Tsinghua University**
 **Beijing 100084 (CN)**
• **Nuctech Technology (Jiangsu) Co., Ltd.**
 **Jintan District**
 **Changzhou**
 **Jiangsu 213200 (CN)**

(72) Inventors:
• **LI, Yuanjing**
 **Beijing 100084 (CN)**
• **LI, Jianmin**
 **Beijing 100084 (CN)**
• **ZHANG, Li**
 **Beijing 100084 (CN)**
• **GU, Jianping**
 **Beijing 100084 (CN)**
• **DAI, Shiyu**
 **Beijing 100084 (CN)**
• **QIN, Feng**
 **Beijing 100084 (CN)**
• **XU, Bin**
 **Beijing 100084 (CN)**

(74) Representative: **Cabinet Beau de Loménie**
 **158, rue de l'Université**
 **75340 Paris Cedex 07 (FR)**

(54) **TOOL DETECTION METHOD AND DEVICE**

(57)    The present application relates to a tool detection method and device, and belongs to the technical field of security inspection. The tool detection method comprises: acquiring a tool image database comprising a tool image, wherein the tool image is marked with a tool position; training the tool image database by using PVANET to obtain an automatic tool detection model; and inputting a radiation image to be detected into the automatic tool detection model to obtain a detection result, wherein the detection result comprises whether there is a tool in the radiation image and a tool position when there is a tool. According to the tool detection method and device, an electronic device and a computer-readable medium of the present application, it is possible to detect whether there is a tool in a radiation image and a tool position when there is a tool.

```
┌────────────────────────────────────────────┐
│ Acquire a tool image database comprising a  │  S110
│ tool image, wherein the tool image is       │
│ marked with a tool position                 │
└────────────────────────────────────────────┘
                      │
                      ▼
┌────────────────────────────────────────────┐
│ Train the tool image database by using      │  S120
│ PVANET to obtain an automatic tool          │
│ detection model                             │
└────────────────────────────────────────────┘
                      │
                      ▼
┌────────────────────────────────────────────┐
│ Input a radiation image to be detected into │  S130
│ the automatic tool detection model to       │
│ obtain a detection result, wherein the      │
│ detection result comprises whether there is │
│ a tool in the radiation image and a tool    │
│ position when there is a tool               │
└────────────────────────────────────────────┘
```

FIG. 1

EP 3 696 725 A1

**Description**

The present disclosure claims the priority of the invention patent application No. CN201810117890.2, filed February 6, 2018 and entitled "Cutting-tool Detection Method and Apparatus".

TECHNICAL FIELD

The present disclosure relates to the technical field of security inspection, and in particular, to a method and device for cutting-tool detection, an electronic apparatus, and a computer-readable medium.

BACKGROUND

Cutting-tools are instruments with direct lethality and destructive power. Carrying a cutting-tool illegally is potentially dangerous and socially dangerous, and will directly affect social stability and the safety of people's lives and property. On the one hand, those restrained cutting-tools illegally inflowing into the market and society provide some premeditated criminals with extremely harmful criminal cutting-tools and increase social instability. On the other hand, they will intensify and expand social conflict. Once a contradiction occurs between the person carrying the cutting-tool illegally and others, the development of event is likely to lose control. Therefore, cutting-tool detection is an important task in the field of security inspection, and it is of great significance to effectively control illegally carrying cutting-tools. The increasing number of injuries incidents reflects that the relevant detection methods are not sufficient, giving criminals a chance.

At present, the police of various countries use security inspection technology to conduct targeted security inspections of dangerous and prohibited items to prevent and combat criminal terrorist activities. Among them, radiation imaging is one of the most commonly used technologies in vehicle/container security inspection tasks.

Radiation imaging is a technique that uses high-energy rays to penetrate an object to observe the inside of the object, which can reflect the shape of a hidden cutting-tool in a vehicle/container. Although existing radiographic inspection systems have realized the vehicle/container perspective inspection function, they still rely heavily on manual inspection tasks. Dangerous items and prohibited items vary widely, the cutting-tools have a small size relative to the vehicle/container and has a low probability of occurrence. In addition, the manual experience is uneven, checking the pictures one by one is a huge workload. Identifying small sized cutting-tools for a long time will most likely cause visual fatigue and will inevitably lead to wrong or even missed detection.

Existing technologies that use computer technology for auxiliary detection mainly rely on traditional artificially designed features, using features such as HAAR features, SURF (Speed Up Robust Features) features, and LBP (Local Binary Pattern) features. It is difficult to design a good feature with traditional feature extraction. Even if multiple features are combined, it is difficult to achieve universal features. The algorithm may even fail in the face of complex and changing backgrounds. Thus, how to improve the degree of automation and speed of cutting-tool inspection has also become the focus of attention.

Therefore, a new cutting-tool detection method and device are needed.

The above information disclosed in the background section is only used to enhance the understanding of the background of the present disclosure, so it may include information that does not constitute the prior art known to those of ordinary skill in the art.

SUMMARY

The present application discloses a cutting-tool detection method and device capable of automatically detecting whether a cutting-tool is present in a radiation image and, when the cutting-tool is present, a position of the cutting-tool.

Other features and advantages of the present disclosure will be apparent from the following detailed description.

According to an aspect of the disclosure, there is provided a cutting-tool detection method, including: obtaining a cutting-tool image database including a cutting-tool image, wherein a cutting-tool position is marked on the cutting-tool image; training the cutting-tool image database by using PVANET to obtain an automatic cutting-tool detection model; and inputting a radiation image to be detected to the automatic cutting-tool detection model to obtain a detection result, the detection result including whether a cutting-tool is present in the radiation image and, when the cutting-tool is present, a position of the cutting-tool.

According to some embodiment, the obtaining a cutting-tool image database including a cutting-tool image includes: collecting cutting-tool images of different numbers and types of cutting-tools in various placement; normalizing the cutting-tool images; and extracting a region of interest from the cutting-tool images after the normalizing, and marking the cutting-tool position on the region of interest.

According to some embodiment, the normalizing the cutting-tool images includes: scaling an original resolution of the cutting-tool images according to physical parameters of a scanning equipment used for collecting the cutting-tool images; and performing gray stretch on the cutting-tool images after the scaling.

According to some embodiment, the training the cutting-tool image database by using PVANET to obtain an automatic cutting-tool detection model includes: extracting features of the cutting-tool images; and generating the automatic cutting-tool detection model by training, based on the features of the cutting-tool images and the region of interest, a region proposal network and a convolutional neural network.

According to some embodiment, the extracting features of the cutting-tool images includes: extracting features of the cutting-tool images by means of ReLU, Inception module and HyperNet module.

According to some embodiment, the generating the automatic cutting-tool detection model by training, based on the features of the cutting-tool images and the region of interest, a region proposal network and a convolutional neural network includes: training the region proposal network and the convolutional neural network in an alternating training manner.

According to some embodiment, the training the region proposal network and the convolutional neural network in an alternating training manner includes: initializing offset and weight matrixes of the regional proposal network and the convolutional neural network; extracting candidate regions by using the region proposal network; performing positive and negative sample calibration on the candidate regions; combining the candidate regions after the calibration with the convolutional neural network after the initializing, and fine-tuning the convolutional neural network, the region proposal network and the convolutional neural network do not share a convolutional layer; initializing a convolutional layer of the region proposal network by using convolutional layer parameters of the convolutional neural network as trained, and continuing to train the region proposal network, the region proposal network and the convolutional neural network sharing a convolutional layer; and fine-tuning the convolutional neural network while keeping the shared convolution layer unchanged, updating the offset and weight matrixes until convergence, and generating the automatic cutting-tool detection model.

According to some embodiment, the candidate regions are extracted using an anchor mechanism of target object detection in the region proposal network, and 42 types of anchors with different area sizes are used.

According to some embodiment, the inputting a radiation image to be detected to the automatic cutting-tool detection model to obtain a detection result includes: performing a normalization process on the radiation image; and inputting the radiation image subject to the normalization process to the automatic cutting-tool detection model to obtain the detection result about cutting-tools.

According to some embodiment, the inputting the radiation image subject to the normalization process to the automatic cutting-tool detection model to obtain the detection result about cutting-tools includes: generating candidate regions of the radiation image according to the radiation image subject to the normalization process; performing cutting-tool classification on the candidate regions of the radiation image; determining, when a confidence level of cutting-tools in a candidate region is greater than a preset threshold, a cutting-tool is present in the candidate region, and calibrating the cutting-tool; and performing filtering on all candidate regions where the cutting-tool is present and filtering out overlapping frames to obtain the cutting-tool position.

According to another aspect of the disclosure, there is provided a cutting-tool detection device, including: a training data obtaining module, configured to obtain a cutting-tool image database including a cutting-tool image, wherein a cutting-tool position is marked on the cutting-tool image; a model training module, configured to train the cutting-tool image database by using PVANET to obtain an automatic cutting-tool detection model; and an automatic cutting-tool detection module, configured to input a radiation image to be detected to the automatic cutting-tool detection model to obtain a detection result, the detection result including whether a cutting-tool is present in the radiation image and, when the cutting-tool is present, a position of the cutting-tool.

According to yet another aspect of the disclosure, there is provided an electronic apparatus, including: one or more processors; and a storage device configured to store one or more programs; wherein the one or more programs, when being executed by the one or more processors, cause the one or more processors to implement the method according to any one of above embodiment.

According to still another aspect of the disclosure, there is provided a computer-readable medium having stored therein a computer program which, when executed by a processor, implements the method according to any one of above embodiment.

According to the method and device for cutting-tool detection, the electronic apparatus, and the computer-readable medium disclosed by some embodiments of the disclosure, a cutting-tool image database including a cutting-tool image is obtained, wherein a cutting-tool position is marked on the cutting-tool image; the cutting-tool image database is trained by using PVANET to obtain an automatic cutting-tool detection model; a radiation image to be detected is input to the automatic cutting-tool detection model to obtain a detection result, the detection result including whether a cutting-tool is present in the radiation image and, when the cutting-tool is present, a position of the cutting-tool, thereby improving the accuracy and detection speed of the cutting-tool detection.

Other features and advantages of the present disclosure will be apparent from the following detailed description.

BRIEF DESCRIPTION OF THE DRAWINGS

The above and other features and advantages of the present disclosure will become more apparent by describing its example embodiments in detail with reference to the accompanying drawings.

FIG. 1 illustrates a flowchart of a cutting-tool detection method according to an exemplary embodiment of the present disclosure.
FIG. 2 illustrates a schematic diagram of a typical cutting-tool image according to an exemplary embodiment of the present disclosure.
FIG. 3 illustrates a flowchart of a cutting-tool detection method according to another exemplary embodiment of the present disclosure.
FIG. 4 is a schematic diagram illustrating a process of establishing an automatic cutting-tool detection model according to an exemplary embodiment of the present disclosure.
FIG. 5 illustrates a schematic diagram of an Inception module according to an exemplary embodiment of the present disclosure.
FIG. 6 is a schematic diagram illustrating multi-scale hopping-layer feature extraction according to an exemplary embodiment of the present disclosure.
FIG. 7 illustrates a flowchart of a cutting-tool detection method according to an exemplary embodiment of the present disclosure;
FIG. 8 is a schematic diagram illustrating a cutting-tool detection result according to an exemplary embodiment of the present disclosure.
FIG. 9 illustrates a block diagram of a cutting-tool detection device according to an exemplary embodiment of the present disclosure.
FIG. 10 illustrates a block diagram of an electronic apparatus according to an exemplary embodiment of the present disclosure.
FIG. 11 illustrates a schematic diagram of a computer-readable storage medium according to an exemplary embodiment of the present disclosure.

DETAILED DESCRIPTION

Exemplary embodiments will now be described more fully with reference to the accompanying drawings. However, example embodiments can be implemented in various forms and should not be construed as limited to the embodiments set forth herein; rather, these embodiments are provided so that this disclosure will be thorough and complete, and will fully convey the concept of example embodiments To those skilled in the art. The same reference numerals in the drawings denote the same or similar parts, and their repeated description will be omitted.

Furthermore, the described features, structures, or characteristics may be combined in any suitable manner in one or more embodiments. In the following description, numerous specific details are provided to give a full understanding of the embodiments of the present disclosure. However, those skilled in the art will realize that the technical solutions of the present disclosure may be practiced without one or more of the specific details, or other methods, components, materials, devices, steps, etc. may be adopted. In other instances, well-known structures, methods, devices, implementations, materials, or operations have not been shown or described in detail to avoid obscuring aspects of the present disclosure.

In the detection of contraband, the detection of cutting-tools is a relatively weak part. At present, there is no desirable solution for those vehicles/containers illegally carrying cutting-tools. The cutting-tool detection method provided by the embodiments of the present disclosure, in combination with radiation imaging, performs automatic cutting-tool detection based on deep learning, and can be applied to automatic detection of cutting-tools carried in vehicles/containers. Obviously, this disclosure does not limit its application scenarios. In the cutting-tool detection method provided by the embodiments of the present disclosure, during the detection, a radiographic imaging method is used to automatically detect whether there is a cutting-tool in a radiation image to be detected. If there is a cutting-tool, a position of the cutting-tool in the corresponding radiation image is indicated to assist in manually determining whether there is a case of illegally carrying the cutting-tool.

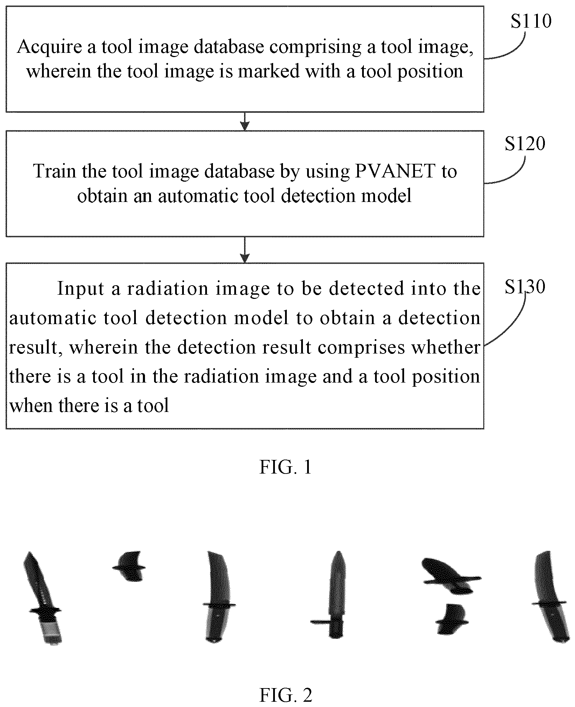

FIG. 1 illustrates a flowchart of a cutting-tool detection method according to an exemplary embodiment of the present disclosure.

As shown in FIG. 1, the cutting-tool detection method may include the following steps.

In step S110, a cutting-tool image database including a cutting-tool image is obtained, wherein a cutting-tool position is marked on the cutting-tool image.

FIG. 2 illustrates a schematic diagram of a typical cutting-tool image according to an exemplary embodiment of the present disclosure.

In an exemplary embodiment, the obtaining a cutting-tool image database including a cutting-tool image includes: collecting cutting-tool images of different numbers and types of cutting-tools in various placement; normalizing the cutting-tool images; and extracting a region of interest from the cutting-tool images after the normalizing, and marking the cutting-tool position on the region of interest.

In the embodiment of the present disclosure, before the model training starts, a normalization process is performed on the input data. This is because if the distribution of the training data is different from the test data, the generalization ability of the model is greatly reduced. On the other hand, if the distribution of each batch of training data is different (batch gradient descent), then the model learns to adapt to different distributions in each iteration, which will greatly reduce the training speed of the network.

In an exemplary embodiment, the normalizing the cutting-tool images includes: scaling an original resolution of the cutting-tool images according to physical parameters of a scanning equipment used for collecting the cutting-tool images; and performing gray stretch on the cutting-tool images after the scaling.

The gray stretch is also referred to as contrast stretch, which is a kind of gray scale transformation, and may use piecewise linear transformation functions to improve the dynamic range of gray scale during image processing. A certain gray interval can be selectively stretched to improve the output image.

In order to automatically detect the cutting-tool position in the vehicle/container radiation image, the cutting-tool detection method provided by the embodiments of the present disclosure is mainly based on deep learning theory and is trained using CNN (Convolutional Neural Network) to obtain an automatic cutting-tool detection model. The cutting-tool detection method mainly includes: 1) generating a cutting-tool image database; 2) training a automatic cutting-tool detection model; and 3) automatic cutting-tool detection process.

Among them, the generating a cutting-tool image database may further include image acquisition, image pre-processing, and extraction of a region of interest, and the automatic cutting-tool detection mainly includes image pre-processing, judgment and marking of suspected regions. The generating of the cutting-tool image database is described below.

Before the automatic cutting-tool detection model is established, the cutting-tool image database needs to be generated, which may include the following steps.

Firstly, cutting-tool images are acquired. In an embodiment, a certain number of cutting-tool images are collected, so that the cutting-tool image database contains cutting-tool images of different numbers and types of cutting-tools in various placement. The cutting-tool image database $\{\overline{X}\}$ is obtained. FIG. 1 is a typical cutting-tool image. In this embodiment, the diversity of the cutting-tool samples is enriched, so that the cutting-tool detection method provided by the embodiments of the present disclosure has a generalization capability.

Then, the acquired cutting-tool images are pre-processed. Due to different scanning equipment, the energy/dose of the ray source is different, and the detector size is different, so the cutting-tool images obtained are different. In order to reduce individual differences and ensure the effectiveness of the algorithm, the acquired cutting-tool images are normalized. For example, assuming that the original two-dimensional cutting-tool image signal as obtained is $X$, according to the physical parameters of the scanning equipment that collects the original two-dimensional image signal, the resolution of $X$ is scaled to, for example, 5 mm/pixel, and gray stretch is performed, then a normalized cutting-tool image $\overline{X}$ is obtained.

Then, a region of interest (ROI) is extracted from the above-mentioned normalized cutting-tool image. In this embodiment, in the grayscale image obtained by scanning, the cutting-tool position is manually marked in the unit of the cutting-tool, and the coordinates of the cutting-tool are given as $(x, y, w, h)$, where w is the width, $h$ is the height, and $x, y$ are the coordinate positions of the upper left corner of the cutting-tool, respectively. Here, the upper left corner of the figure is taken as the origin for example, but the present disclosure is not limited thereto.

In the embodiment of the present disclosure, the air portion in $\overline{X}$ is detected and then excluded from the detection process. One of the purposes is to increase the speed of calculations, and the other is to avoid false alarms in the air. Histogram of $\overline{X}$ is collected, and the brightest peak $a$ in the histogram is calculated, and a normal air distribution $(a, \sigma_a)$ centered thereon is fitted. Then, a threshold may be set to $t_a = a - 3 * \sigma_a$. Pixels in $\overline{X}$ larger than $t_a$ are considered as air, and no detection calculation is performed thereon.

In step S120, the cutting-tool image database is trained by using PVANET to obtain an automatic cutting-tool detection model.

With the exponential growth of all aspects of computer computing speed, network speed, memory capacity, and data size, deep learning theories have made huge breakthroughs, especially the emergence of regional suggestion methods, which have produced a large number of object detection algorithms, such as: RCNN (Region-based Convolutional Networks), algorithm, Fast R-CNN algorithm, Faster R-CNN algorithm and lightweight network model PVANET (PVAnet is target direction of the RCNN series, which is improved based on Faster-RCNN. The Faster-RCNN basic network may use ZF, VGG, Resnet, etc., but it is difficult to improve accuracy and speed at the same time. The meaning of PVAnet mey be "Performance Vs Accuracy", which means to accelerate model performance without losing accuracy.)

In PVANET, based on a target detection structure of "CNN feature extraction + region proposal + region of interest classification (RoI classification)", the feature extraction part may be redesigned by using concatenated ReLU (rectified linear unit), Inception module, the multi-scale concept of HyperNet and the like. Rhe RoI classification is performed by selecting an image region from the image, which serves as the focus of image analysis. Such a region is determined for further processing, which can reduce processing time and increase accuracy. In machine vision and image processing, those frames, circles, ellipses, irregular polygons and the like outlined from the processed image as regions to be processed may be referred to as the region of interest, ROI. Various operators and functions are commonly used on machine vision software such as Halcon, OpenCV, and Matlab to obtain the ROI and perform further image processing.

In an embodiment, the Inception module is used in the feature-generating sub-networks. The Inception module is suitable for the detection of small or large target objects, and the cutting-tools carried by the vehicles/containers to be detected in the embodiments of the present disclosure belong to the small target objects (herein, "small" is a relative concept, that is, the cutting-tool is a small target object relative to size of the vehicle/container on which the cutting-tool is placed.) Moreover, the Inception module can improve the performance of the neural network while ensuring the classification accuracy, and reduce the amount of calculation to achieve improved speed. The HyperNet proposes different sampling strategies for different convolutional layers and obtains multi-scale hopping features through integration, which also makes small target objects perform better.

In an exemplary embodiment, the training the cutting-tool image database by using PVANET to obtain an automatic cutting-tool detection model includes: extracting features of the cutting-tool images; and generating the automatic cutting-tool detection model by training, based on the features of the cutting-tool images and the region of interest, a region proposal network and a convolutional neural network

In an exemplary embodiment, the extracting features of the cutting-tool images includes: extracting features of the cutting-tool images by means of ReLU, Inception module and HyperNet module.

In an exemplary embodiment, the generating the automatic cutting-tool detection model by training, based on the features of the cutting-tool images and the region of interest, a region proposal network and a convolutional neural network includes: training the region proposal network and the convolutional neural network in an alternating training manner.

In an exemplary embodiment, the training the region proposal network and the convolutional neural network in an alternating training manner includes: initializing offset and weight matrixes of the regional proposal network and the convolutional neural network; extracting candidate regions by using the region proposal network; performing positive and negative sample calibration on the candidate regions; combining the candidate regions after the calibration with the convolutional neural network after the initializing, and fine-tuning the convolutional neural network, the region proposal network and the convolutional neural network do not share a convolutional layer; initializing a convolutional layer of the region proposal network by using convolutional layer parameters of the convolutional neural network as trained, and continuing to train the region proposal network, the region proposal network and the convolutional neural network sharing a convolutional layer; and fine-tuning the convolutional neural network while keeping the shared convolution layer unchanged, updating the offset and weight matrixes until convergence, and generating the automatic cutting-tool detection model.

It should be noted that, in this embodiment, fine-tuning is a term of deep learning, that is, refers to a process of using parameters to continue training with new data.

In an exemplary embodiment, the candidate regions are extracted using an anchor mechanism of target object detection in the region proposal network, and 42 types of anchors with different area sizes are used.

In this embodiment, the size range of the 42 anchors with different area sizes may be 60*60 to 1060*580. That is, the 42 types of anchors include a minimum size of 60*60 pixels and a maximum size of 1060*580 pixels. In this way, the minimum size can meet the needs for detection of small targets. Different sizes can also meet the demand for detection of different target sizes.

In this embodiment, the theory of deep learning is used to detect whether a vehicle/container carries a cutting-tool. Because the cutting-tools carried in vehicles/containers belong to small target objects, the lightweight network PVANET achieves the goal of optimizing deep neural network calculations while achieving high-precision of small target detection tasks.

In this embodiment, CNN is used as an example, and the concepts of concatenated ReLU, Inception module, and HyperNet multi-scale are used in PVANET to improve the feature extraction algorithm part, making the designed cutting-tool detection method more suitable for automatic detection of small target objects such as cutting-tools carried in vehicles/containers. The candidate region extraction and CNN classification, which are originally separated, are combined with each other. The candidate region extraction uses the Anchor mechanism in the Region Proposal Networks (RPN) that is suitable for the detection of small target objects. Different from Faster R-CNN, in which nine types of anchors with different area sizes are used, in this embodiment, a total of 42 types of anchors with different area sizes are used. Finally, an end-to-end deep neural network is achieved to detect whether a vehicle/container carries a cutting-tool.

In this embodiment, a concatenated ReLU (rectified linear unit) is used in the early stage of CNN training, and the amount of calculation is reduced without losing accuracy. The Inception module is used in the feature-generating sub-networks, because the Inception module can efficiently capture small target objects in the image, which can satisfy the purpose of capturing small target objects such as cutting-tools carried in vehicles/containers. The output feature of CNN should correspond to a sufficiently small receptive field to accurately locate the small region of interest, and also avoid the parameter redundancy caused by the large convolution kernel. When a receptor is stimulated and excited, the nerve impulses (various sensory information) are transmitted to the upper center through the centripetal neurons in the sensory organ, and a stimulus area reflected (dominated) by a neuron may be referred to as the receptive field of the neuron.

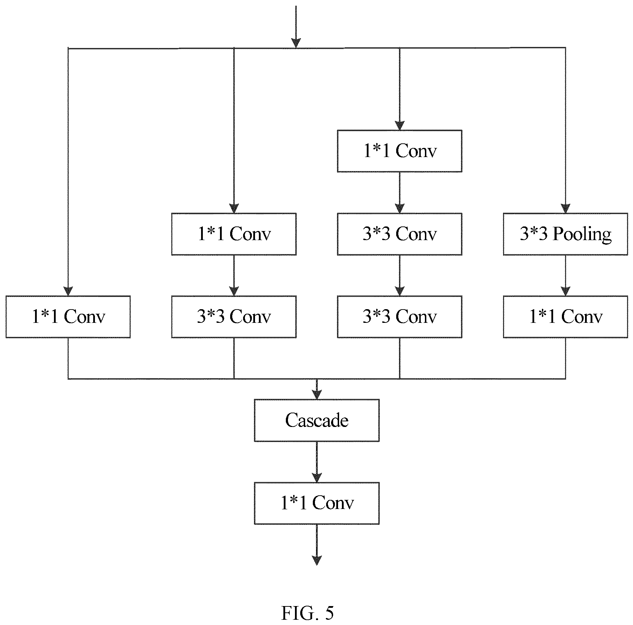

The design of the Inception module in this embodiment is shown in FIG. 5. The designed Inception module increases the non-linearity of the input mode, slows down the growth of the receptive field of the output features, and makes it possible to accurately capture small targets such as cutting-tools carried in vehicles/containers.

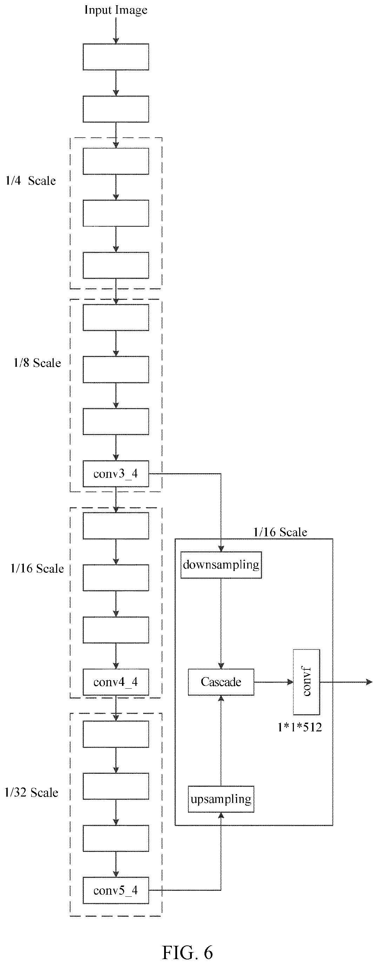

Since directly connecting all abstraction layers will generate redundant information that requires a lot of calculations, and in order to help subsequent region proposal network and classification network to detect small target objects such as cutting-tools carried in vehicles/containers, the multi-scale concept of hopping-layer features in HyperNet is used in this embodiment. HyperNet proposes different sampling strategies for different convolutional layers and integrates them to obtain hopping-layer features, which makes small target objects perform better. It combines the last layer and two intermediate layers (with 2 times and 4 times, respectively, the scale of the last layer), and the 2-times-layer is used as the reference standard layer. FIG. 6 is a schematic diagram illustrating multi-scale hopping-layer feature extraction. In an embodiment, the convolutional layer 3 4 (down sampling), convolutional layer 4 4, and convolutional layer 5_4 (up sampling) are combined into a 512-channel multi-scale output feature as the input of the Faster R-CNN model.

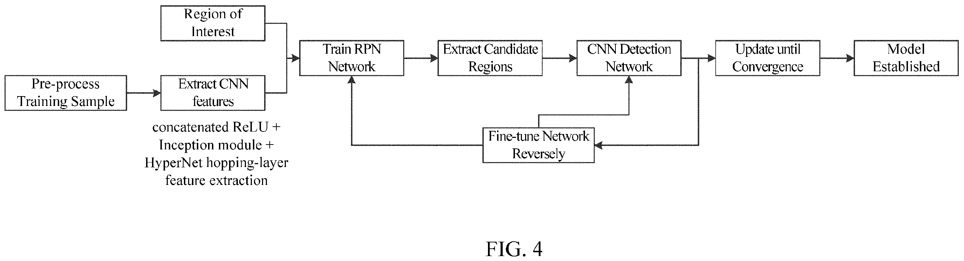

FIG. 4 is a schematic diagram illustrating a process of establishing an automatic cutting-tool detection model according to an exemplary embodiment of the present disclosure. The process of establishing the automatic cutting-tool detection model in this embodiment is an end-to-end detection method, and can achieve both target detection and target positioning.

As shown in FIG. 4, this embodiment provides a process for establishing an automatic cutting-tool detection model, including the following steps.

Firstly, the training samples are pre-processed. Then, CNN features (through concatenated ReLU + Inception module + HyperNet hopping-layer feature extraction) and regions of interest are extracted, and an RPN network is trained based on the extracted CNN features and regions of interest. Subsequently, candidate regions are extracted and the CNN detection network is updated until convergence and the model is thus established. Herein, reverse fine-tuning of RPN training network and CNN detection network is also included.

In an embodiment, ReLU is mainly used for the first few of convolution layers. The original convolution layer (conv-layer) may be inverted, scaled and biased, so as to reduce the output channel by half. Then, the corresponding output channel can be obtained by taking negative value, so as to double the speed. Adding scale changes and offsets can allow the slope and activation threshold of each channel to be different from their opposite channels. In this way, it is possible to achieve twice the filters with different parameters under half the parameters. Inception module can be well solved for both small and large targets, mainly by controlling the size of the convolution kernel for experiment. HyperNet mainly combines convolutional feature layers of different scales to perform multi-scale object detection.

This embodiment adopts the region proposal method. The candidate region extraction is combined with the CNN classification by using the RPN network, that is, it is composed of two major modules: the RPN module and the CNN detection module, so as to achieve end-to-end detection of cutting-tools carried by vehicles/containers. In an embodiment, the RPN module is different from Faster R-CNN using 9 anchors with different area sizes and, instead, uses 42 anchors with multi-scale and multiple aspect ratio, making it more suitable for small target object detection in vehicles/containers carrying cutting-tools. There are two training methods, one is the alternating training method, and the other is the fusion training method. The difference between the fusion training method and the alternating training method lies in that, in the reverse regression process, sharing layers of the two networks should combine the RPN network loss and the CNN detection network loss.

This embodiment gives an example of the alternating training method. The specific training process of the alternating training method is as follows.

The first step is initialization. Firstly, the input image is scaled to a size of less than 600 pixels on the short side, and the weights in the RPN network and the CNN detection network are initialized using a pre-trained model. The initial offsets of the visible layer and the hidden layer are a, b, the initial weight matrix is $W$, and the offsets and weight matrix are incremented by $\Delta a$, $\Delta b$, $\Delta W$. The advantage of using the pre-trained model to initialize the RPN network and the CNN detection network lies in that the model is close to be optimal to a certain extent, which saves time and resources than random initialization.

The second step is to extract candidate regions. On the feature map extracted from the last layer of the CNN detection network, full-connection features with a length of m dimensions is generated using a sliding window of $n*n$.

The same regions of interest in each sliding window are combined, and candidate regions, $X=\{x_1, x_2, x_3,...x_k\}$, are generated using different scales and image aspect ratios. At the same time, two branches of full-connection layers are generated on this layer of features: a rectangular frame classification layer and a rectangular frame regression layer. There are $2*k$ and $4*k$ candidate regions above the two different layers, respectively.

In this embodiment, k is set to 300, sorting is performed according to overlapping areas between all the extracted candidate regions and the actually labeled rectangular frame, and 300 candidate regions are obtained after filtering. However, the present disclosure is not limited thereto.

The third step is calibration of positive and negative samples. After the candidate regions are extracted in the second step, the candidate regions should be calibrated with positive and negative samples. The calibration rule may be as follows. When the rectangular frame of a candidate region overlaps with the actual value by a ratio greater than 0.7, it is considered to be a positive sample. When the rectangular frame of a candidate region overlaps with the actual value by a ratio less than 0.3, it is marked as a negative sample, and the remaining is discarded without being used for training.

It should be noted that the above ratios 0.7 and 0.3 are only used for illustration, and may be adjusted according to the situation in different applications.

In the fourth step, the candidate regions obtained in the third step are combined with the CNN detection network obtained in the first step to fine-tune the CNN detection network. In this step, the two networks, the RPN network and the CNN detection network, do not share data of the convolutional layer.

In the fifth step, the CNN detection network trained in the fourth step is used to initialize and train the RPN network. In this step, the convolution layer data is fixed, and only the network layers belonging to the RPN are fine-tuned. In this step, the two networks, the RPN network and the CNN detection network, share the convolutional layer.

The sixth step is to keep the shared convolution layer unchanged, continue to fine-tune the CNN detection network, and update the bias and weight matrix:

$$W = W + \eta(\frac{1}{n_s}\Delta W), a = a + \eta(\frac{1}{n_s}\Delta a), b = b + \eta(\frac{1}{n_s}\Delta b),$$

until convergence, the final detection model is established.

In the above formula, $\eta$ is the learning rate, which may be set to 0.0001 here, but it may be different in different training stages and have a relationship with the batch size.

In addition, in the process of training the neural network, as the depth of the network increases, this embodiment also adopts: 1) adding residual structures to the Inception module to stabilize and the second half of the automatic detection deep neural network framework; 2) adding Batch normalization before activation of all ReLUs; and 3) effectively training by means such as dynamically controlling the learning rate based on plateau detection.

Although the random gradient descent method is simple and efficient for training deep networks, it requires artificial selection of parameters, such as learning rate, parameter initialization, weight attenuation coefficient, drop out ratio and the like. The selection of these parameters is so important to the training results that much time is wasted on these tuning parameters. A relatively large initial learning rate may be selected for Batch Normalization, so as to increase the training speed, because this algorithm converges quickly, and there is also no need to deal with the selection of drop out and L2 regular term parameters in overfitting. By using Batch Normalization, these two parameters may be removed, or a smaller L2 regular constraint parameter may be selected, because Batch Normalization has improved network panning characteristics. There is also no need to use a local response normalization layer, because BN itself is a normalization network layer. Moreover, the training data may be completely in disrupted order (so as to prevent a certain sample from being selected frequently during each batch of training).

In step S130, a radiation image to be detected is input to the automatic cutting-tool detection model to obtain a detection result, the detection result including whether a cutting-tool is present in the radiation image and, when the cutting-tool is present, a position of the cutting-tool.

In an exemplary embodiment, wherein the inputting a radiation image to be detected to the automatic cutting-tool detection model to obtain a detection result includes: performing a normalization process on the radiation image; and inputting the radiation image subject to the normalization process to the automatic cutting-tool detection model to obtain the detection result about cutting-tools.

In an exemplary embodiment, the inputting the radiation image subject to the normalization process to the automatic cutting-tool detection model to obtain the detection result about cutting-tools includes: generating candidate regions of the radiation image according to the radiation image subject to the normalization process; performing cutting-tool classification on the candidate regions of the radiation image; determining, when a confidence level of cutting-tools in a candidate region is greater than a preset threshold, a cutting-tool is present in the candidate region, and calibrating the cutting-tool; and performing filtering on all candidate regions where the cutting-tool is present and filtering out overlapping frames to obtain the cutting-tool position.

In this embodiment, the preset threshold of the confidence level of cutting-tools may be generally set to 0.6-0.8.

In this embodiment, some RPN proposal frames may overlap with other proposal frames at a large part. To reduce redundancy, non-maximum suppression (NMS) is adopted. NMS does not affect the final detection accuracy, but greatly reduces the number of proposal frames.

The test process is actually a subset of the automatic cutting-tool detection model establishment process. It can be determined whether there is a cutting-tool present in a generated candidate region by classifying the regions. At the same time, regression is performed on a specific position of the cutting-tool in the candidate region. As the regression method, a regularization regression is performed by interpolating an actual target rectangle frame position with a predicted target rectangle frame region position.

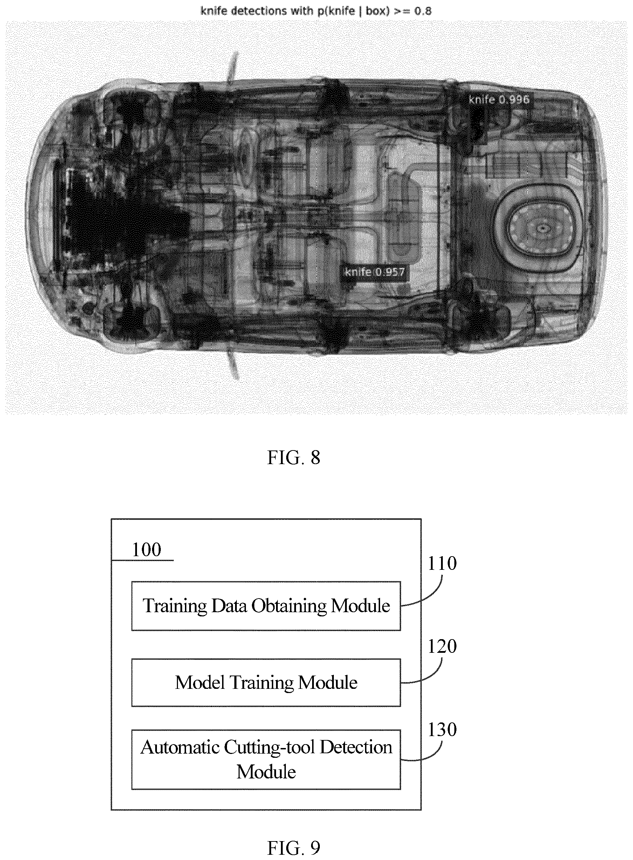

The coordinates, where the cutting-tool is located, may be determined. FIG. 8 is a schematic diagram illustrating a cutting-tool detection result. Where p is the probability of the cutting-tool and 0.8 is the threshold.

The cutting-tool detection method provided by the embodiments of the present disclosure is an automatic detection method for a vehicle/container carrying cutting-tools based on deep learning, which can be applied to the automatic detection of contraband in a radiation image, and can simultaneously realize target detection and target positioning. Based on radiation imaging, the automatic object detection using deep learning solves problems such as missing detection due to the small size of the cutting-tool target compared to the container size, and overcomes difficulties, such as failed convergence of neural network due to small number of training samples, by expanding the sample set. It can automatically and accurately detect whether there is a cutting-tool in the radiation image of the container. If there is a cutting-tool, a position of the cutting-tool in the corresponding radiation image is indicated to assist in manually determining whether there is a case of illegally carrying the cutting-tool.

In order to achieve the purpose of assisting manual work, the performance of the cutting-tool detection method provided by the embodiments is also a task that should be considered. The detection method should have a low false positive rate and false negative rate. In addition, it should meet the requirements of real-time detection. The false detection rate of the cutting-tool detection method provided in the embodiments is less than 0.5% and the false negative rate is less than 10%, and the calculation is completed within 1 second, which meets the above application requirements.

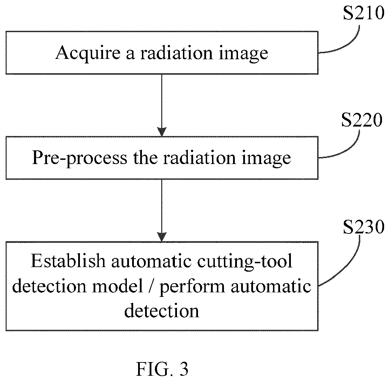

FIG. 3 illustrates a flowchart of a cutting-tool detection method according to another exemplary embodiment of the present disclosure.

As shown in FIG. 3, the cutting-tool detection method provided in this embodiment may include the following steps.

In step S210, a radiation image is acquired.

In step S220, the radiation image is pre-processed.

It should be noted that the model training process and the automatic cutting-tool detection process may be considered as a similar process, both of which need to firstly obtain the radiation image of the vehicle/container, and then normalize the radiation image. If the radiation image is used for the model training process, it is used as training data. If the radiation image is used in the automatic cutting-tool detection process, the pre-processed radiation image is input to the trained automatic cutting-tool detection model for detection.

In step S230, an automatic cutting-tool detection model is established or automatic detection is performed.

According to the cutting-tool detection method provided by the embodiments of the present disclosure, cutting-tool detection is performed on the radiation image obtained by scanning, which can avoid the problems of traditional method including detection vulnerabilities and poor manual image determination. It is of great significance in combating illegal carrying of cutting-tools and has already been verified as having good performance and strong practicability through actual practice.

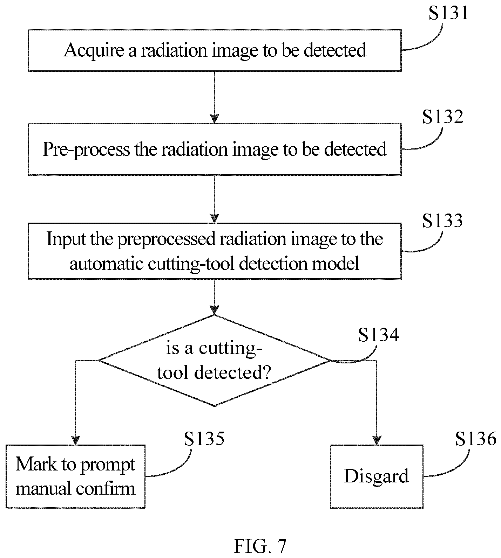

FIG. 7 illustrates a flowchart of a cutting-tool detection method according to an exemplary embodiment of the present disclosure.

As shown in FIG. 7, the cutting-tool detection method in this embodiment includes the following steps.

In step S131, a radiation image to be detected is acquired.

In step S132, the radiation image to be detected is pre-processed.

In step S133, the preprocessed radiation image is input to the automatic cutting-tool detection model.

In step S134, it is determined, by the automatic cutting-tool detection model, whether a cutting-tool is detected in the radiation image; when a cutting-tool is detected, the process proceeds to step S135; when no cutting-tool is detected, the process proceeds to step S136.

In step S135, the radiation image including the detected cutting-tool is marked to remind manual confirmation.

In step S136, the radiation images without any cutting-tool being detected are discarded and, thus, not required to be labeled.

In this embodiment of the automatic cutting-tool detection, the collected cutting-tool radiation images are firstly pre-processed. The preprocessing method may refer to the normalized processing method in the automatic cutting-tool detection model described above, which is not described in detail here. The obtained pre-processed radiation image of the cutting-tool is input into the automatic cutting-tool detection model, candidate regions are generated in the input image, and the cutting-tool classification is performed in candidate regions. If the confidence level of cutting-tools in a region is greater than a preset threshold, the cutting-tool is considered as being present in the region. At the same time, the rectangular frame calibration is performed, and finally filtering is performed on all candidate regions where the cutting-tool is present and overlapping frames are filtered out to obtain the cutting-tool position.

FIG. 9 illustrates a block diagram of a cutting-tool detection device according to an exemplary embodiment of the present disclosure.

As shown in FIG. 9, the cutting-tool detection device 100 may include a training data obtaining module 110, a model training module 120, and an automatic cutting-tool detection module 130.

The training data obtaining module 110 may be configured to obtain a cutting-tool image database including a cutting-tool image, wherein a cutting-tool position is marked on the cutting-tool image.

The model training module 120 may be configured to train the cutting-tool image database by using PVANET to obtain an automatic cutting-tool detection model.

The automatic cutting-tool detection module 130 may be configured to input a radiation image to be detected to the automatic cutting-tool detection model to obtain a detection result, the detection result including whether a cutting-tool is present in the radiation image and, when the cutting-tool is present, a position of the cutting-tool.

In an exemplary embodiment, the training data obtaining module 110 may include an image acquisition sub-module, a first normalization sub-module, and a region-of-interest extraction sub-module. The image acquisition sub-module may be configured to collect cutting-tool images of different numbers and types of cutting-tools in various placement. The first normalization sub-module may be configured to perform normalization processing on the cutting-tool images. The region-of-interest extraction sub-module may be configured to extract a region of interest from the cutting-tool images after the normalizing, and marking the cutting-tool position on the region of interest.

In an exemplary embodiment, the first normalization sub-module may include a scaling unit and a stretching unit. The scaling unit may be configured to scale an original resolution of the cutting-tool images according to physical parameters of a scanning equipment used for collecting the cutting-tool images. The stretching unit may be configured to perform gray stretch on the cutting-tool images after the scaling.

In an exemplary embodiment, the model training module 120 may include a feature extraction sub-module and a model building sub-module. The feature extraction sub-module may be configured to extract features of the cutting-tool images. The model building sub-module may be configured to generate the automatic cutting-tool detection model by training, based on the features of the cutting-tool images and the region of interest, a region proposal network and a convolutional neural network.

In an exemplary embodiment, the feature extraction sub-module may include a feature extraction unit. The feature extraction unit may be configured to extract the features of the cutting-tool images by means of ReLU, Inception module and HyperNet module.

In an exemplary embodiment, the model building sub-module may include a network training unit. The network training unit may be configured to train the region proposal network and the convolutional neural network in an alternating training manner.

In an exemplary embodiment, the network training unit may include an initialization sub-unit, a candidate region extraction sub-unit, a sample calibration sub-unit, a first fine-tuning sub-unit, a region proposal network training sub-unit, and a second fine-tuning sub-unit. The initialization sub-unit may be configured to initialize offset and weight matrixes of the regional proposal network and the convolutional neural network. The candidate region extraction subunit may be configured to extract candidate regions by using the region proposal network. The sample calibration unit may be configured to perform positive and negative sample calibration on the candidate regions. The first fine-tuning sub-unit may be configured to combine the candidate regions after the calibration with the convolutional neural network after the initializing, and fine-tune the convolutional neural network, the region proposal network and the convolutional neural network do not share a convolutional layer. The region proposal network training subunit may be configured to initialize a convolutional layer of the region proposal network by using convolutional layer parameters of the convolutional neural network as trained, and continue to train the region proposal network, the region proposal network and the convolutional neural network sharing a convolutional layer. The second fine-tuning subunit may be configured to continue to fine-tune the convolutional neural network while keeping the shared convolution layer unchanged, update the offset and weight matrixes until convergence, and the automatic cutting-tool detection model is established.

In an exemplary embodiment, the candidate regions are extracted using an anchor mechanism of target object detection in the region proposal network, and 42 types of anchors with different area sizes are used.

In an exemplary embodiment, the automatic cutting-tool detection module 130 may include a second normalization sub-module and a detection sub-module. The second normalization sub-module may be configured to perform normalization processing on the radiation images. The detection sub-module may be configured to input a normalized radiation image to the automatic cutting-tool detection model to obtain the detection result about cutting-tools.

In an exemplary embodiment, the detection sub-module may include a candidate region extraction unit, a cutting-tool classification unit, a cutting-tool calibration unit, and a position acquisition unit. The candidate region extraction unit may be configured to candidate regions of the radiation image according to the radiation image subject to the normalization process. The cutting-tool classification unit may be configured to perform cutting-tool classification on the candidate regions of the radiation image. The cutting-tool calibration unit may be configured to determine, when a confidence level of cutting-tools in a candidate region is greater than a preset threshold, a cutting-tool is present in the candidate region, and calibrate the cutting-tool. The position acquiring unit may be configured to perform filtering on all candidate regions where the cutting-tool is present and filter out overlapping frames to obtain the cutting-tool position.

For specific implementation of each component module and/or unit of the cutting-tool detection device in the embodiment of the present disclosure, reference may be made to the cutting-tool detection method in the foregoing embodiments of the present disclosure, and details are not described herein again.

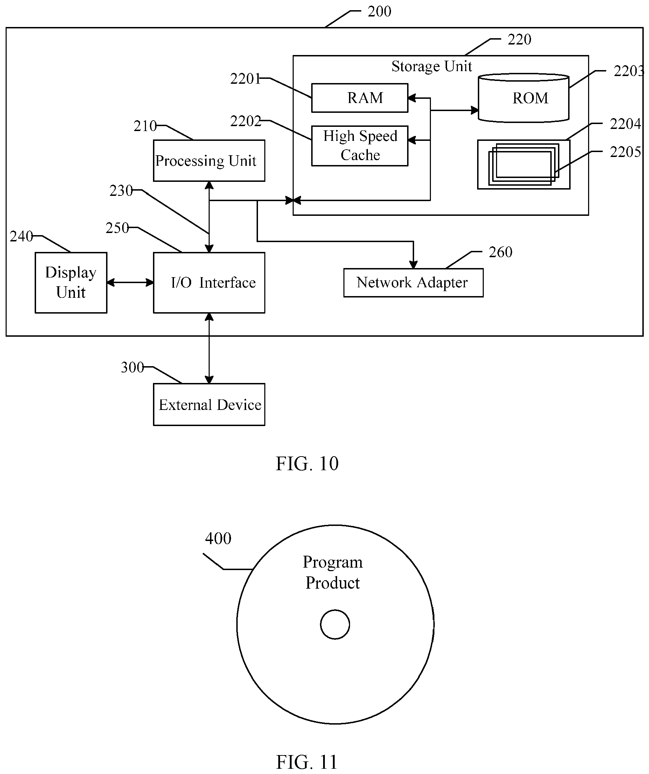

FIG. 10 illustrates a block diagram of an electronic apparatus according to an exemplary embodiment.

An electronic apparatus 200 according to this embodiment of the present disclosure is described below with reference to FIG. 10. The electronic apparatus 200 shown in FIG. 10 is merely an example, and should not impose any limitation on the functions and application coverage of the embodiments of the present invention.

As shown in FIG. 10, the electronic apparatus 200 is illustrated in the form of a general-purpose computing device. The components of the electronic apparatus 200 may include, but not limited to, at least one processing unit 210, at least one storage unit 220, a bus 230 connecting different system components (including the storage unit 220 and the processing unit 210), a display unit 240, and the like.

The storage unit stores program code, and the program code can be executed by the processing unit 210, causing the processing unit 210 to execute actions according to various exemplary embodiments of the present disclosure described in the above-mentioned electronic data flow processing method of the specification. For example, the processing unit 210 may perform actions as shown in FIG. 1.

The storage unit 220 may include a readable medium in the form of a volatile storage unit, such as a random access storage unit (RAM) 2201 and/or a cache storage unit 2202, and may further include a read-only storage unit (ROM) 2203.

The storage unit 220 may further include a program/utility tool 2204 having a group of (at least one) program modules 2205. Such program modules 2205 may include, but not limited to, an operating system, one or more application programs, other program modules and program data, each or some combination of these examples may include an implementation of the network environment.

The bus 230 may be one or more of several types of bus structures, including a memory unit bus or a memory unit controller, a peripheral bus, a graphics acceleration port, a processing unit, or a local area using any bus structure in a variety of bus structures.

The electronic apparatus 200 may also communicate with one or more external devices 300 (such as a keyboard, pointing device, Bluetooth device, etc.), and may also communicate with one or more devices that enable a user to interact with the electronic apparatus 200, and/or communicate with any device (e.g., router, modem, etc.) that enables the electronic apparatus 200 to communicate with one or more other computing devices. Such communication may be performed through an input/output (I/O) interface 250. Moreover, the electronic apparatus 200 may also communicate with one or more networks (such as a local area network (LAN), a wide area network (WAN), and/or a public networks, for example, the Internet) through the network adapter 260. The network adapter 260 may communicate with other modules of the electronic apparatus 200 through the bus 230. It should be understood that although not shown in the drawings, other hardware and/or software modules may be used in conjunction with the electronic apparatus 200, including but not limited to: microcode, device drivers, redundant processing units, external disk drive arrays, RAID systems, tape drives, data backup storage systems, and the like.

Through the description of the foregoing embodiments, those skilled in the art can easily understand that the exemplary embodiments described herein can be implemented by software, or by software in combination with necessary hardware. Therefore, the technical solution according to the embodiments of the present disclosure may be embodied in the form of a software product, which may be stored in a non-volatile storage medium (which may be a CD-ROM, a U disk, a mobile hard disk, etc.) or on a network, including several instructions to enable a computing device (which may be a personal computer, a server, or a network device, etc.) to execute the above-mentioned cutting-tool detection method according to the embodiments of the present disclosure.

FIG. 11 illustrates a schematic diagram of a computer-readable storage medium according to an exemplary embodiment.

Referring to FIG. 11, a program product 400 for implementing the above method according to the embodiments of the present disclosure is described, which may use a portable compact disc read-only memory (CD-ROM) and include program code, and may be stored in a terminal device, for example, running on a personal computer. However, the program product of the present disclosure is not limited thereto. According to this specification, the readable storage medium may be any tangible medium containing or storing a program, and the program may be used by or in combination with an instruction execution system, apparatus, or device.

The program product may employ any combination of one or more readable medium. The readable medium may be a readable signal medium or a readable storage medium. The readable storage medium may be, for example, but is not limited to, an electronic, magnetic, optical, electromagnetic, infrared, or semiconductor system, apparatus, or device, or any combination thereof. More specific examples (non-exhaustive list) of the readable storage medium include: electrical connection with one or more wires, portable disk, hard disk, random access memory (RAM), read-only memory (ROM), erasable programmable read-only memory (EPROM or flash memory), optical fiber, portable compact disc read-only memory (CD-ROM), optical storage device, magnetic storage device, or any suitable combination of the foregoing.

The computer-readable storage medium may include a data signal propagated in baseband or as part of a carrier wave, in which a readable program code is carried. Such a propagated data signal may take many forms, including but not limited to electromagnetic signals, optical signals, or any suitable combination of the foregoing. A readable storage medium may also be any readable medium other than the readable storage medium, and the readable medium may send, propagate, or transmit a program for used by or in combination with an instruction execution system, apparatus, or device. The program code contained on the readable storage medium may be transmitted using any appropriate medium, including but not limited to wireless, wired, optical fiber cable, RF and the like, or any suitable combination of the foregoing.

The program code for performing the operations of the present disclosure may be written in any combination of one or more programming languages, which include object-oriented programming languages, such as Java and C ++, and also include conventional procedural programming language, such as "C" language or a similar programming language. The program code can be executed entirely on the user computing device, partly on the user device, as an independent software package, partly on the user computing device and partly on the remote computing device, or entirely on the remote computing device or server. In the case of the remote computing device, the remote computing device may be connected to the user computing device through any kind of network, including a local area network (LAN) or a wide area network (WAN), or may be connected to an external computing device (for example, connected via the Internet provided by an Internet service provider).

The above computer-readable medium carries one or more programs which, when being executed by one of the devices, cause the computer-readable medium to implement the following function: obtaining a cutting-tool image database including a cutting-tool image, wherein a cutting-tool position is marked on the cutting-tool image; training the cutting-tool image database by using PVANET to obtain an automatic cutting-tool detection model; and inputting a radiation image to be detected to the automatic cutting-tool detection model to obtain a detection result, the detection result including whether a cutting-tool is present in the radiation image and, when the cutting-tool is present, a position of the cutting-tool.

Those skilled in the art can understand that the above modules may be distributed in the device according to the description of the embodiments, or corresponding changes may be made in one or more devices that are different from the embodiments. The modules in the above embodiments may be combined into one module, or further divided into multiple sub-modules.

Through the description of the above embodiments, those skilled in the art can easily understand that the example embodiments described herein can be implemented by software, or by software in combination with necessary hardware. Therefore, the technical solution according to the embodiment of the present disclosure may be embodied in the form of a software product, which may be stored in a non-volatile storage medium (which may be a CD-ROM, a U disk, a mobile hard disk and the like) or on a network, including several instructions to enable a computing device (which may be a personal computer, a server, a mobile terminal, or a network device and the like) to execute the method according to the embodiments of the present disclosure.

From the above detailed description, those skilled in the art can easily understand that the system and method according to the embodiments of the present disclosure have one or more of the following advantages.

The exemplary embodiments of the present disclosure have been particularly shown and described above. It should be understood that the present disclosure is not limited to the disclosed embodiments, is intended to cover various modifications and equivalent arrangements included within the spirit and scope of the appended claims.

**Claims**

1. A cutting-tool detection method, comprising:

   obtaining a cutting-tool image database including a cutting-tool image, wherein a cutting-tool position is marked on the cutting-tool image;
   training the cutting-tool image database by using PVANET to obtain an automatic cutting-tool detection model; and
   inputting a radiation image to be detected to the automatic cutting-tool detection model to obtain a detection result, the detection result including whether a cutting-tool is present in the radiation image and, when the cutting-tool is present, a position of the cutting-tool.

2. The method of claim 1, wherein the obtaining a cutting-tool image database including a cutting-tool image comprises:

collecting cutting-tool images of different numbers and types of cutting-tools in various placement;
normalizing the cutting-tool images; and
extracting a region of interest from the cutting-tool images after the normalizing, and marking the cutting-tool position on the region of interest.

3. The method of claim 2, wherein the normalizing the cutting-tool images comprises:

scaling an original resolution of the cutting-tool images according to physical parameters of a scanning equipment used for collecting the cutting-tool images; and
performing gray stretch on the cutting-tool images after the scaling.

4. The method according to claim 2 or 3, wherein the training the cutting-tool image database by using PVANET to obtain an automatic cutting-tool detection model comprises:

extracting features of the cutting-tool images; and
generating the automatic cutting-tool detection model by training, based on the features of the cutting-tool images and the region of interest, a region proposal network and a convolutional neural network.

5. The method of claim 4, wherein the extracting features of the cutting-tool images comprises:
extracting features of the cutting-tool images by means of ReLU, Inception module and HyperNet module.

6. The method according to claim 4, wherein the generating the automatic cutting-tool detection model by training, based on the features of the cutting-tool images and the region of interest, a region proposal network and a convolutional neural network comprises:
training the region proposal network and the convolutional neural network in an alternating training manner.

7. The method of claim 6, wherein the training the region proposal network and the convolutional neural network in an alternating training manner comprises:

initializing offset and weight matrixes of the regional proposal network and the convolutional neural network;
extracting candidate regions by using the region proposal network;
performing positive and negative sample calibration on the candidate regions;
combining the candidate regions after the calibration with the convolutional neural network after the initializing, and fine-tuning the convolutional neural network, the region proposal network and the convolutional neural network do not share a convolutional layer;
initializing a convolutional layer of the region proposal network by using convolutional layer parameters of the convolutional neural network as trained, and continuing to train the region proposal network, the region proposal network and the convolutional neural network sharing a convolutional layer; and
fine-tuning the convolutional neural network while keeping the shared convolution layer unchanged, updating the offset and weight matrixes until convergence, and generating the automatic cutting-tool detection model.

8. The method of claim 7, wherein the candidate regions are extracted using an anchor mechanism of target object detection in the region proposal network, and 42 types of anchors with different area sizes are used.

9. The method of claim 7, wherein the inputting a radiation image to be detected to the automatic cutting-tool detection model to obtain a detection result comprises:

performing a normalization process on the radiation image; and
inputting the radiation image subject to the normalization process to the automatic cutting-tool detection model to obtain the detection result about cutting-tools.

10. The method of claim 9, wherein the inputting the radiation image subject to the normalization process to the automatic cutting-tool detection model to obtain the detection result about cutting-tools comprises:

generating candidate regions of the radiation image according to the radiation image subject to the normalization process;

performing cutting-tool classification on the candidate regions of the radiation image;

determining, when a confidence level of cutting-tools in a candidate region is greater than a preset threshold, a cutting-tool is present in the candidate region, and calibrating the cutting-tool; and

performing filtering on all candidate regions where the cutting-tool is present and filtering out overlapping frames to obtain the cutting-tool position.

11. A cutting-tool detection device, comprising:

a training data obtaining module, configured to obtain a cutting-tool image database including a cutting-tool image, wherein a cutting-tool position is marked on the cutting-tool image;

a model training module, configured to train the cutting-tool image database by using PVANET to obtain an automatic cutting-tool detection model; and

an automatic cutting-tool detection module, configured to input a radiation image to be detected to the automatic cutting-tool detection model to obtain a detection result, the detection result including whether a cutting-tool is present in the radiation image and, when the cutting-tool is present, a position of the cutting-tool.

12. An electronic apparatus, comprising:

one or more processors; and

a storage device configured to store one or more programs;

wherein the one or more programs, when being executed by the one or more processors, cause the one or more processors to implement the method of any one of claims 1-10.

13. A computer-readable medium having stored therein a computer program which, when executed by a processor, implements the method of any one of claims 1-10.

Acquire a tool image database comprising a tool image, wherein the tool image is marked with a tool position

S110

Train the tool image database by using PVANET to obtain an automatic tool detection model

S120

Input a radiation image to be detected into the automatic tool detection model to obtain a detection result, wherein the detection result comprises whether there is a tool in the radiation image and a tool position when there is a tool

S130

FIG. 1

FIG. 2

S210

Acquire a radiation image

S220

Pre-process the radiation image

S230

Establish automatic cutting-tool detection model / perform automatic detection

FIG. 3

FIG. 4

FIG. 5

Input Image

1/4 Scale

1/8 Scale

conv3_4

1/16 Scale

1/16 Scale

downsampling

conv4_4

Cascade

convf

1*1*512

1/32 Scale

upsampling

conv5_4

FIG. 6

S131

Acquire a radiation image to be detected

S132

Pre-process the radiation image to be detected

S133

Input the preprocessed radiation image to the automatic cutting-tool detection model

is a cutting-tool detected?    S134

S135

Mark to prompt manual confirm

S136

Disgard

FIG. 7

knife detections with p(knife | box) >= 0.8

FIG. 8

FIG. 9

200

220

Storage Unit

2201

RAM

2203

ROM

210

2202

Processing Unit

High Speed
Cache

2204

2205

230

240

250

Display
Unit

I/O  Interface

260

Network Adapter

300

External Device

FIG. 10

400

Program
Product

FIG. 11

## INTERNATIONAL SEARCH REPORT

| International application No. |
|---|
| **PCT/CN2019/074658** |

### A.    CLASSIFICATION OF SUBJECT MATTER

G06K 9/32(2006.01)i

According to International Patent Classification (IPC) or to both national classification and IPC

### B.    FIELDS SEARCHED

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI; 刀, 归一化, 训练, 模型, 检测, 识别, 感兴趣区域, 区域建议网络, knife, normalization, train, model, detect, ROI, region of interest, RPN, region proposal network, PVANET

### C.    DOCUMENTS CONSIDERED TO BE RELEVANT

| Category* | Citation of document, with indication, where appropriate, of the relevant passages | Relevant to claim No. |
|---|---|---|
| Y | CN 107607562 A (BEIJING DEEPCTRL CO., LTD.) 19 January 2018 (2018-01-19) paragraphs [0042]-[0106], and figures 1-5 | 1-13 |
| Y | HONG, Sanghoon et al. "PVANet: Lightweight Deep Neural Networks for Real-time Object Detection" *The 1st International Workshop on Efficient Methods for Deep Neural Networks,* 31 December 2016 (2016-12-31), Sections 2 and 3 | 1-13 |
| A | CN 106485268 A (NEUSOFT CORPORATION) 08 March 2017 (2017-03-08) entire document | 1-13 |
| A | US 2014177946 A1 (ELECTRONICS AND TELECOMMUNICATIONS RESEARCH INSTITUTE) 26 June 2014 (2014-06-26) entire document | 1-13 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 April 2019** | **09 May 2019** |

| Name and mailing address of the ISA/CN | Authorized officer |
|---|---|
| **National Intellectual Property Administration, PRC (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/074658**

| Patent document cited in search report | | | Publication date (day/month/year) | Patent family member(s) | | | Publication date (day/month/year) |
|---|---|---|---|---|---|---|---|
| CN | 107607562 | A | 19 January 2018 | None | | | |
| CN | 106485268 | A | 08 March 2017 | None | | | |
| US | 2014177946 | A1 | 26 June 2014 | KR | 101724658 | B1 | 10 April 2017 |
| | | | | KR | 20140081254 | A | 01 July 2014 |

Form PCT/ISA/210 (patent family annex) (January 2015)

**REFERENCES CITED IN THE DESCRIPTION**

**Patent documents cited in the description**

- CN 201810117890